# EUROPÄISCHE PATENTSCHRIFT

(11) **EP 3 543 560 B1**
(45) Veröffentlichungstag und Bekanntmachung des Hinweises auf die Patenterteilung: **25.11.2020**
(21) Anmeldenummer: 18000267.7
(22) Anmeldetag: 19.03.2018
(51) Int. Cl.: F16H 37/08, F16H 47/04

(54) **STUFENLOSES VERZWEIGUNGSGETRIEBE**
INFINITELY VARIABLE BRANCHED TRANSMISSION
TRANSMISSION À RÉPARTITION DE PUISSANCE À VARIATION CONTINUE

(43) Veröffentlichungstag der Anmeldung: 25.09.2019
(73) Patentinhaber: Glassner, Rudolf, 4407 Steyr (AT); VDS-Holding GmbH, 4493 Wolfern (AT)
(72) Erfinder: GLASSNER, Rudolf, 4407 Steyr (AT)
(74) Vertreter: Kovac, Werner

(56) Entgegenhaltungen:
- DE-A1- 2 757 300
- DE-A1- 3 536 335

## Beschreibung

Die Erfindung betrifft ein stufenloses Leistungsverzweigungsgetriebe für den Antrieb von Fahrzeugen und/oder Arbeitsmaschinen durch eine Verbrennungskraftmaschine, umfassend einen Variator und ein Summierungsgetriebe und eine Anzahl Kupplungen, wobei der Variator einen Teil der Leistung mit zwischen maximalen Drehzahlen in beiden Drehrichtungen kontinuierlich steuerbarer Ausgangsdrehzahl dem Summierungsgetriebe zur Verfügung stellt, die dort dem anderen Teil der Leistung überlagert wird, wobei mehrere Bereiche in Synchronpunkten ineinander überführbar sind, und wobei das Summierungsgetriebe ein 4-welliges Planetengetriebe ist, welches ein erstes Sonnenrad als erstes Zentralrad, ein zweites Zentralrad, ein Hohlrad und eine Anzahl auf einem Steg gelagerte Planetenräder hat.

Die Patentschrift DE 35 33 193 hat ein derartiges stufenloses Leistungsverzweigungsgetriebe zum Gegenstand. Sowohl der Variator als auch das Summierungsgetriebe sind koaxial zur Ausgangswelle einer Verbrennungskraftmaschine angeordnet. Der koaxiale Variator erfordert eine Hohlwelle. Das Summierungsgetriebe ist ein Planetengetriebe mit zwei Hohlrädern und steht über zwei weitere Hohlwellen (die eine in der anderen) mit den ausgangsseitig angebrachten Kupplungen in Verbindung. Das Summierungsgetriebe und die Hohlwellen sind sehr aufwendig, insbesondere die äußere der beiden verschachtelten Hohlwellen mit großem Durchmesser. Besonders nachteilig sind die abtriebsseitig angeordneten Kupplungen, die für das Ausgangsmoment des ganzen Getriebes auszulegen sind und daher sehr viel Bauraum brauchen. Schließlich hat das Getriebe nur drei Bereiche, einen rein hydrostatischen und zwei leistungsverzweigte.

Ein weiteres stufenloses Leistungsverzweigungsgetriebe ist in der US 9,488,263 beschrieben. Es umfasst zwei Planetengetriebe in modularer Anordnung, ein eingangsseitiges Differentialmodul und ein ausgangsseitiges Bereichsmodul, und einen Variator. Einige Kupplungen sind zwischen den Modulen angeordnet und eine ist dem Bereichsmodul nachgeordnet. Auch bei diesem Getriebe brauchen die Kupplungen viel Bauraum, weil sie nach dem Summenmoment aus dem mechanisch übertragenen und dem hydrostatischen Moment auszulegen sind. Die Steuerölzufuhr zu den Kupplungen ist schwierig, weil einige Kupplungen zwischen den Modulen angeordnet sind und eine weitere Kupplung dem Bereichsmodul nachgeordnet ist. Überhaupt ist, bezogen auf die Anzahl der Bereiche, eine höhere Anzahl an Kupplungen erforderlich.

Schließlich ist noch aus der EP 2258966 ein Leistungsverzweigungsgetriebe mit einem hydrostatischen oder elektrischen Variator bekannt, dessen Summierungsgetriebe aus zwei kompletten Planetensätzen (Sonne, Hohlrad und Planetenräder) besteht, deren beider Sonnenräder auf einer vom Variator über Stirnräder angetriebenen Welle sitzen, also fest miteinander verbunden sind; ebenso sind es die Stege (auch Planetenträger genannt) der beiden Planetengetriebe. Der mechanische Leistungspfad umfasst eine Reihe von Stirnradstufen am Getriebeeingang. Daher ist eine Bauweise des Getriebes mit koaxialen Eingangs- und Ausgangswellen nicht möglich und das Getriebe baut sehr breit. Der vorletzte leistungsverzweigte Vorwärtsbereich ist nicht in einem Synchronpunkt in den nächsthöheren Bereich überführbar.

Die DE 3536335 offenbart ein stufenloses Leistungsverzweigungsgetriebe für einen Antrieb durch eine Verbrennungskraftmaschine, umfassend einen Variator, ein Summierungsgetriebe und eine Anzahl Kupplungen, wobei das Summierungsgetriebe ein vierwelliges Planetengetriebe ist und die Kupplungen im Kraftfluss zwischen dem Variator und dem Summierungsgetriebe angeordnet sind, jedoch nicht im Kraftfluss zwischen der Verbrennungskraftmaschine und dem Summierungsgetriebe, und wobei der Steg mit der zu treibenden Last verbunden ist. Bei dieser Anordnung müssen drei Wellen als ineinander rotierende Hohlwellen ausgebildet sein.

Es ist daher Aufgabe der Erfindung, ein Getriebe zu schaffen, das die eingangs aufgezählten Nachteile vermeidet. Es soll mit weniger und einfacheren Bauteilen eine kostengünstige und Bauraum sparende Bauweise und eine höhere Funktionalität erreicht werden. Diese Aufgabe wird mit einem stufenlosen Leistungsverzweigungsgetriebe nach Anspruch 1 gelöst. Die abhängigen Ansprüche betreffen besondere Ausführungsarten der in Anspruch 1 genannten Erfindung.

Die in der Eingangseinheit zusammengefassten Kupplungen sind nur für das geringere Eingangsmoment, vor der Endübersetzung und nur für den mechanischen Anteil, auszulegen. Ihr Raumbedarf ist daher reduziert und die Druckölzufuhr ist einfacher.

Das vierwellige Summierungsgetriebe hat nur einen Planetensatz, zum Unterschied vom erstgenannten Stand der Technik, wobei der letztgenannte Stand der Technik (DE 3536335 A1) ebenfalls nur einen Planetenradsatz offenbart . Ein Getriebeelement (ein Zentralrad, das ist ein Sonnenrad oder ein Hohlrad) entfällt. Das ergibt eine einfachere und kürzere Bauweise des ganzen Getriebes und ermöglicht direkten Durchtrieb, das heißt Eingangswelle und Ausgangswelle des Getriebes liegen auf derselben Drehachse. Trotzdem ist nur eine Hohlwelle nötig.

Der mechanische Eingangspfad führt je nach Fahrbereich entweder über das erste Sonnenrad oder über das erste Hohlrad. Der Eingangspfad vom Variator führt in jedem Bereich über ein zweites Zentralrad, welches entweder ein zweites Sonnenrad oder ein zweites Hohlrad ist. Das ergibt eine größere bauliche Flexibilität im Ausgangsbereich. Der Abtrieb erfolgt jedenfalls über den Steg.

Die Flexibilität ergibt sich aus der Wahl zwischen zwei Ausführungsformen des Summierungsgetriebes, bei unveränderter Eingangseinheit. In einer ersten Ausführungsform ist das zweite Zentralrad als Sonnenrad ausgebildet. Der Abtrieb erfolgt dann über eine Hohlwelle oder einen ein Abtriebszahnrad aufweisenden Steg. In der zweiten Ausführungsform ist das zweite Zentralrad als Hohlrad ausgebildet und der Abtrieb erfolgt durch eine einfache Vollwelle. Diese Bauweise eignet sich besonders für einen direkten Durchtrieb. Das heißt, Eingangswelle und Ausgangswelle des Getriebes liegen auf derselben Drehachse.

Der Variator kann sowohl hydrostatisch als auch elektromotorisch oder sonstwie ausgeführt sein, und bezüglich des ganzen Getriebes je nach Einbauerfordernissen angeordnet und mit dem Eingangsglied (Sonnenrad oder Hohlrad) des Summierungsgetriebes antriebsverbunden sein.

In einer vorteilhaften Ausgestaltung sind das erste Hohlrad und erste Sonnenrad des Summierungsgetriebes auf der Seite der Eingangseinheit und der Steg (=Planetenträger) und das zweite Zentralrad auf der der Eingangseinheit abgewandten Seite des Summierungsgetriebes angeordnet und sind am Steg erste und mit diesen kämmende zweite Planetenräder gelagert. Es handelt sich somit um einen Ravigneaux - Satz. In der ersten Ausführungsform kämmen die zweiten Planetenräder mit dem zweiten Sonnenrad, in der zweiten Ausfürungsform kämmen die zweiten Planetenräder mit dem zweiten Hohlrad. Alles andere ist gleich.

Weil die Eingangseinheit nur über die ihr zugewandten Elemente des Summierungsgetriebes (das erste Sonnenrad und das erste Hohlrad) mit dem Summierungsgetriebe in Verbindung steht, kann die Eingangseinheit bei unverändertem Summierungsgetriebe verschiedene Ausführungsformen annehmen. In der einfachsten treibt die Eingangswelle von der Verbrennungskraftmaschine direkt wahlweise entweder über eine erste Kupplung das erste Sonnenrad oder über eine zweite Kupplung das erste Hohlrad.

In einer ersten Weiterbildung ist in der Eingangseinheit eine erste Bremse vorgesehen, mit der das erste Hohlrad festsetzbar ist. Eine Bremse ist auch eine Kupplung und fällt daher im ersten Anspruch unter den Dachbegriff Kupplung. Durch Betätigen nur dieser Bremse (und keiner weiteren Kupplung) wird ein langsamster Bereich mit Antrieb nur über den Variator gewählt. Dabei wirkt das Summierungsgetriebe als Übersetzungsgetriebe mit hoher Übersetzung.

In einer erweiterten Ausbildung enthält die Eingangseinheit ein als einfaches Planetengetriebes ausgebildetes Übersetzungsgetriebe, das mittels einer eingangsseitigen Bremse schaltbar ist. Damit wird zumindest ein weiterer Bereich geschaffen. In einer bevorzugten Ausbildung besteht das Übersetzungsgetriebe aus einem mit der Eingangswelle fest verbundenen Planetenträger mit eingangsseitigen Planetenrädern, einem eingangsseitigen Sonnenrad auf einer Durchtriebswelle zwischen den Kupplungen und einem eingangsseitigen Hohlrad, das mittels der eingangsseitigen Bremse blockierbar ist. So ist das Übersetzungsgetriebe und die eingangsseitige Bremse raumsparend und mit minimalem Bauaufwand zusammen mit den anderen Kupplungen in der Eingangseinheit zusammengefasst.

Im Folgenden wird die Erfindung anhand von Abbildungen beschrieben und erläutert. Es stellen dar:
Fig. 1 eine erste Ausführungsform im Längsschnitt, vereinfacht,
Fig. 2 eine zweite Ausführungsform im Längsschnitt, vereinfacht,
Fig. 3 einen Drehzahlplan zur ersten Ausführungsform,
Fig. 4 eine Kupplungstabelle zu Fig. 3.

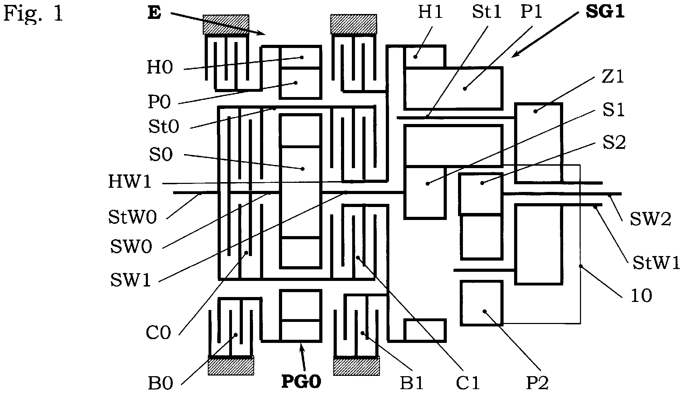

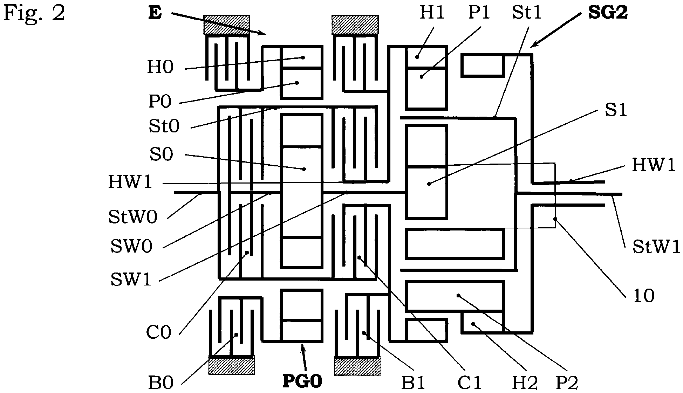

In den Fig. 1 und 2 sind die funktionswesentlichen Elemente mit sinnfälligen Akronymen bezeichnet, der Rest mit Ziffern. Gehäuseteile, Variator und Steuerung sind der Übersichtlichkeit halber weggelassen. Die Akronyme stehen für:
- VM: Verbrennungskraftmaschine
- SG: stufenloses Leistungsverzweigungsgetriebe
- E: Eingangseinheit
- SG1: Summierungsgetriebe in der ersten Ausführungsform
- SG2: Summierungsgetriebe in der zweiten Ausführungsform
- V: Variator
- PG0: eingangsseitiges Planetengetriebe als Übersetzungsgetriebe
- H0: eingangsseitiges Hohlrad
- H1: erstes Hohlrad
- H2: zweites Hohlrad in der zweiten Ausführungsform
- P0: eingangsseitige Planetenräder
- P1: erste Planetenräder
- P2: zweite Planetenräder
- S0: eingangsseitiges Sonnenrad
- S1: erstes Sonnenrad
- S2: zweites Sonnenrad
- St0: eingangsseitiger Steg (=Planetenträger)
- St1: erster Steg (=Planetenträger)
- StW0: Eingangswelle von der VKM
- StW1: Ausgangswelle
- SW0: eingangsseitige Sonnenradwelle = Durchtriebswelle
- SW1: erste Sonnenradwelle
- SW2: zweite Sonnenradwelle (Zentralradwelle in der ersten Ausführungsform)
- HW1: erste Hohlradwelle
- HW2: zweite Hohlradwelle (Zentralradwelle in der zweiten Ausführungsform)
- Z1: Abtriebszahnrad
- B0: eingangsseitige Bremse
- B1: erste Bremse
- C0: eingangsseitige Kupplung
- C1: erste Kupplung

In **Fig. 1** erfolgt der mechanische Kraftfluss von links nach rechts, von der Verbrennungskraftmaschine VM über die Eingangswelle StW0 in die Eingangseinheit E, die sämtliche Kupplungen und Bremsen sowie hier auch ein eingangsseitiges Planetengetriebe PGO enthält. Die Eingangswelle StW0 endet in dem eingangsseitigen Steg St0, der gleichzeitig den Außenteil der beiden Kupplungen C0 und C1 bildet.

Der Innenteil der Kupplung C0 sitzt auf der eingangsseitigen Sonnenradwelle SW0, die in der einfachsten Ausführungsform zugleich die erste Sonnenradwelle SW1 ist und im ersten Sonnenrad S1 des Summierungsgetriebes endet. In der abgebildeten Ausführungsform ist die eingangsseitige Sonnenradwelle (SW0) eine Durchtriebswelle, auf der das eingangsseitige Sonnenrad S0 sitzt, welches Teil des eingangsseitigen Planetengetriebes PGO ist. Dieses wirkt als Übersetzungsgetriebe. Das eingangsseitige Sonnenrad S0 kämmt mit den im eingangsseitigen Steg St0 gelagerten eingangsseitigen Planetenrädern P0, welche ihrerseits mit dem eingangsseitigen Hohlrad H0 kämmen. Das Hohlrad H0 ist mittels der Bremse B0 mit dem Gehäuse der Eingangseinheit E verbindbar und somit blockierbar.

Der Innenteil der Kupplung C1 sitzt auf der ersten Hohlradwelle HW1, und ist mit dem ersten Hohlrad H1 des Summierungsgetriebes fest verbunden. Je nach gewähltem Bereich wird so der mechanische Leistungsanteil entweder über die Hohlradwelle HW1 oder über die Sonnenradwelle S1 in das Summierungsgetriebe SG eingetragen. Zur Bildung eines rein hydrostischen oder rein elektrischen Bereiches ist die Hohlradwelle HW1 weiters mittels der Bremse B1 mit dem Gehäuse der Eingangseinheit E verbindbar. Das Summierungsgetriebe SG1 wirkt so als reines Übersetzungsgetriebe mit hoher Übersetzung. Das Sonnenrad S1 mit seiner Sonnenradwelle S1 läuft dann leer mit.

Das Summierungsgetriebe SG1 ist ein vierwelliges Planetengetriebe. Die drei Eingangswellen sind erste Sonnenradwelle SW1 mit dem Sonnenrad S1 und die erste Hohlradwelle HW1 mit dem Hohlrad H1 für den jeweiligen mechanischen Anteil und die Zentralradwelle SW2 (hier die Sonnenradwelle mit dem Sonnenrad S2) für den Anteil vom Variator V. Die Ausgangswelle StW1 ist hier eine die Sonnenradwelle SW2 umgebende Hohlwelle.

Die Anordnung ist so getroffen, dass das erste Sonnenrad S1 mit den auf dem Steg St1 gelagerten in Axialrichtung verlängerten ersten Planetenrädern P1 kämmt, welch letztere mit dem ersten Hohlrad H1 und mit den auf demselben Steg St1 gelagerten zweiten Planetenrädern P2 kämmen. Dass die beiderlei Planetenräder P1 und P2 miteinander kämmen, ist in der Darstellung durch den Linienzug 10 angedeutet. Der Steg St1 kann in dieser Ausführungsform als Abtriebszahnrad Z1 ausgebildet sein, soferne der Abtrieb nicht über die Abtriebswelle StW1 erfolgt. Das hängt von der Einbaulage des ganzen Getriebes ab.

Die zweite Ausführungsform gemäß **Fig. 2** unterscheidet sich von der der Fig. 1 dadurch, dass als zweites Zentralrad das zweite Sonnenrad S2 durch das auf der zweiten Hohlradwelle SW2 sitzende zweite Hohlrad H2 ersetzt ist. Somit kämmen die zweiten Planetenräder P2 mit den ersten Planetenrädern P1 (durch den Linienzug 10 angedeutet) und mit dem zweiten Hohlrad H2, welches mit der zweiten Hohlradwelle HW1 fest verbunden ist. Wegen der Antriebsverbindung der beiden Hohlräder H1, H2 sind die zweiten Planetenräder P2 breiter als die ersten Planetenräder P1. Die Planetenräder P1 kämmen wie in Fig. 1 mit dem ersten Sonnenrad S1 und mit dem ersten Hohlrad H1.Die zweite Hohlradwelle HW1 ist hier eine Hohlwelle und die Ausgangswelle StW1 erleichtert als Vollwelle einen direkten koaxialen Durchtrieb durch das Getriebe.

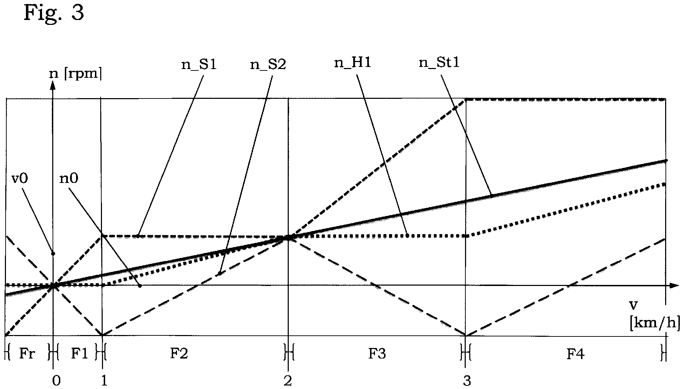

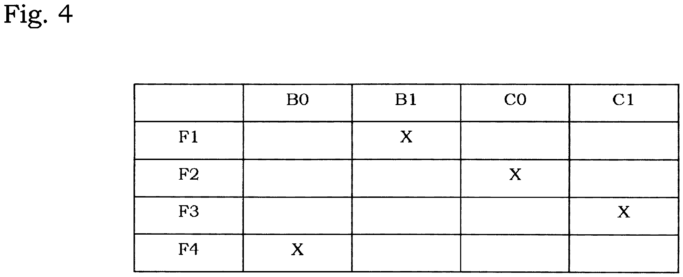

Anhand des in **Fig. 3** dargestellten Drehzahlplanes der Ausführungsform der Fig. 1 und der Kupplungstabelle der Fig. 4 wird im Folgenden die Arbeitsweise des Getriebes erläutert. Im Drehzahlplan ist auf der horizontalen Achse die Geschwindigkeit des Fahrzeuges (proportional der Drehzahl des Steges St1) aufgetragen, und auf der vertikalen Achse die Drehzahlen der einzelnen Glieder in Abhängigkeit von der Fahrgeschwindigkeit, und zwar:
Die Drehzahl des Sonnenrades S2, angetrieben vom Variator mit der Drehzahl n_S2, ist lang strichliert,
die Drehzahl des Sonnenrades S1, angetrieben von der Verbrennungskraftmaschine VM mit der Drehzahl n_S1, ist kurz strichliert,
die Drehzahl des ersten Hohlrades H1 mit der Drehzahl n_H1, ist punktiert,
Die Drehzahl des Steges St 1 als Abtriebsdrehzahl n_St1, ist als durchgehende Linie aufgetragen.

Die Bereiche sind mit F1 bis F4 bezeichnet, der langsame Fahrbereich rückwärts mit Fr. Weiters sind die Fahrbereichsübergänge mit 0 (Fahrgeschwindigkeit 0, Übergang von vorwärts auf rückwärts), mit 1 (Übergang von F1 auf F2), mit 2 (Übergang von F2 in F3) und mit 3 (Übergang von F3 in F4) bezeichnet.

Im Bereich rückwärts Fr und im ersten Bereich F1 ist gemäß Fig. 4 die Die Kupplung (=Bremse) B1 geschlossen, das Hohlrad H1 somit festgebremst (n_H1 =0). Der Variator V treibt über das zweite Sonnenrad S2 und dieses über die ersten und zweiten Planetenräder P2 und P1 den Steg St1. Das erste Sonnenrad S1 dreht sich leer (weil die Kupplungen C1 und C2 offen sind) mit der gleichen Drehzahl wie das Sonnenrad S2, aber im umgekehrten Drehsinn. Der Antrieb des Fahrzeuges erfolgt so nur durch den Variator. Rückwärtsfahrt erfolgt in diesem langsamen Bereich einfach durch Umkehrung des Drehsinnes des Variators. Der Bereichsübergang 0 ist kein Schaltpunkt.

Der zweite Bereich F2 beginnt im Schaltpunkt 1, wenn der Variator und auch das Sonnenrad S1 die maximale Drehzahl in einem Drehsinn erreicht hat, durch Schließen der Kupplung C0 und Öffnen der Bremse B1. Die Drehzahl der Verbrennungskraftmaschine VM ist konstant und gleich der Drehzahl n_S1 des Sonnenrades S1. Daher erfolgt dieser Übergang synchron, ohne Schlupf in Kupplung C0 oder Bremse B1. Die Ausgangsdrehzahl n_S2 des Variators V nimmt nun ab, kreuzt die Linie n=0 und nimmt im entgegengesetzten Drehsinn wieder zu, bis der nächste Schaltpunkt 2 erreicht ist. Dieser Schaltpunkt ist ein weiterer Synchronpunkt, in dem die Drehzahlen n_S1 und n_H1 gleich sind. Die Drehzahl n_S1 des Sonnenrades S1 (und damit die der Verbrennungskraftmaschine VM) ist in diesem zweiten Bereich konstant.

Der dritte Bereich F3 beginnt im Schaltpunkt 3 durch Lösen der Kupplung C0 und simultanes Schließen der Kupplung C1, wieder ohne Schlupf, in einem Synchronpunkt. Dadurch geht der Beitrag der Verbrennungskraftmaschine VM von der ersten Sonne S1 auf das erste Hohlrad H1 über, das nun mit der konstanten Drehzahl n_H1 rotiert. Gleichzeitig beginnt die Drehzahl n_S2 des zweiten Sonnenrades S2 wieder abzunehmen bis sie ihr Maximum im umgekehrten Drehsinn erreicht. Das erste Sonnenrad S1 läuft im ganzen Bereich leer mit der Drehzahl n_S1 um.

Der vierte Bereich F4 beginnt im Schaltpunkt 3 durch Lösen der Kupplung C1 und Schließen der Bremse B0, wobei die Drehzahl des Variators V und damit die Drehzahl n_S2 des Sonnenrades S2 wieder abzunehmen beginnt. Durch das Schließen der Bremse B0 kommt das eingangsseitige Planetengetriebe PG0 als Übersetzungsgetriebe zur Wirkung. Dessen Übersetzung ist so gewählt, dass die im dritten Bereich leer mit der Drehzahl n_S1 mitlaufende Sonne S1 im Schaltpunkt 4 die zur Drehzahl der Verbrennungskraftmaschine VM passende Drehzahl hat und auch hier Kupplung C1 und Bremse B0 ohne Schlupf betätigt werden können. Schaltpunkt 3 ist somit auch ein Synchronpunkt. In diesem vierten Bereich wird die Drehzahl des Variators V wieder von einem Maximum bis zu dem Maximum mit entgegengesetztem Drehsinn variiert. Vorwärts

Insgesamt ist so ein Getriebe mit einem Bereich rückwärts und vier Bereichen vorwärts geschaffen, die jeweils synchron ineinander übergehen.

## Patentansprüche

1. Stufenloses Leistungsverzweigungsgetriebe für den Antrieb von Fahrzeugen und/oder Arbeitsmaschinen durch eine Verbrennungskraftmaschine, umfassend einen Variator und ein Summierungsgetriebe und eine Anzahl Kupplungen, wobei der Variator einen Teil der Leistung mit zwischen maximalen Drehzahlen in beiden Drehrichtungen kontinuierlich steuerbarer Ausgangsdrehzahl dem Summierungsgetriebe zur Verfügung stellt, die dort dem anderen Teil der Leistung überlagert wird, wobei mehrere Bereiche in Synchronpunkten ineinander überführbar sind, und wobei das Summierungsgetriebe ein 4-welliges Planetengetriebe ist, welches ein erstes Sonnenrad (S1) als erstes Zentralrad, ein zweites Zentralrad (S2; H2), ein Hohlrad (H1) und eine Anzahl auf einem Steg (St1) gelagerte Planetenräder (P1,P2) hat, wobei
a. die Kupplungen (C0, C1; B0, B1) in einer Eingangseinheit (E) zusammengefast sind, die im Kraftfluss zwischen der Verbrennungskraftmaschine (VM) und dem Summierungsgetriebe (SG1; SG2) angeordnet ist,
*b.* das Summierungsgetriebe (SG1; SG2) als Planetenräder miteinander kämmende erste (P1) und zweite (P2) auf einem gemeinsamen Planetenträger (St1) gelagerte Planetenräder (P1, P2) hat,
c. das erste Sonnenrad (S1) oder das erste Hohlrad (H1) von der Verbrennungskraftmaschine (VM) und das zweite Zentralrad (S2; H2) vom Variator (V) angetrieben ist, wobei das erste Sonnenrad (S1) oder das erste Hohlrad (H1) beim Übergang von einem Bereich in den nächsten in einem Synchronpunkt abwechselnd über die Eingangseinheit (E) mit der Verbrennungskraftmaschine (VM) antriebsverbunden sind,
d. und wobei schließlich der Steg (St1) mit der zu treibenden Last verbunden ist.

2. Verzweigungsgetriebe [Fig. 1] nach Anspruch 1, **dadurch gekennzeichnet, dass** das zweite Zentralrad als zweites Sonnenrad (S2) ausgebildet ist.

3. Verzweigungsgetriebe nach Anspruch 2, **dadurch gekennzeichnet, dass** der Steg (St1) ein Abtriebzahnrad (Z1) bildet oder mit einem solchen (Z1) drehfest verbunden ist.

4. Verzweigungsgetriebe [Fig. 2] nach Anspruch 1, **dadurch gekennzeichnet, dass** das zweite Zentralrad als zweites Hohlrad (H2) ausgebildet ist.

5. Verzweigungsgetriebe nach einem der vorherigen Ansprüche, **dadurch gekennzeichnet, dass** das erste Hohlrad (H1) auf der Seite der Eingangseinheit (E) und der Steg (St1) auf der der Eingangseinheit (E) abgewandten Seite des Summierungsgetriebes (SG1; SG2) angeordnet ist, und dass das erste Sonnenrad (S1) auf der der Eingangseinheit (E) zugewandten Seite und das zweite Zentralrad (S2; H2) auf der der Eingangseinheit (E) abgewandten Seite angeordnet sind, und dass der Steg (St1) das Ausgangselement ist, das mit der summierten kontinuierlich variablen Drehzahl rotiert.

6. Verzweigungsgetriebe nach Anspruch 2 [Fig. 1], **dadurch gekennzeichnet, dass** das erste Sonnenrad (S1) mit den ersten Planetenrädern (P1), das zweite Sonnenrad (S2) mit den zweiten Planetenrädern (P2), die zweiten Planetenräder (P2) mit den ersten Planetenrädern (P1) und die ersten Planetenräder (P1) mit dem ersten Hohlrad (H1) kämmen.

7. Verzweigungsgetriebe nach Anspruch 4 [Fig. 2], **dadurch gekennzeichnet, dass** das erste Sonnenrad (S1) mit den ersten Planetenrädern (P1), das erste Hohlrad (H1) mit den ersten Planetenrädern (P1), die ersten Planetenräder (P1) mit den zweiten Planetenrädern (P2) und die zweiten Planetenräder (P2) mit dem zweiten Hohlrad (H2) kämmen.

8. Verzweigungsgetriebe nach einem der vorhergehenden Ansprüche, **dadurch gekennzeichnet, dass** die Eingangseinheit (E) über eine Eingangswelle (StW0) mit der Verbrennungskraftmaschine (VM) antriebsverbunden ist und eine erste Kupplung (C0) und eine zweite Kupplung (C1) enthält, wobei die erste Kupplung (C0) die Verbindung zwischen der Eingangswelle (StW0) und einer im ersten Sonnenrad (S1) endenden Sonnenradwelle (SW1) herstellt, und wobei die zweite Kupplung (C1) die Eingangswelle (StW0) mit der ersten Hohlradwelle (HW1) verbindet.

9. Verzweigungsgetriebe nach Anspruch 8, **dadurch gekennzeichnet, dass** die Eingangseinheit (E) eine Bremse (B1) enthält, mittels derer das erste Hohlrad (H1) blockierbar ist.

10. Verzweigungsgetriebe nach Anspruch 8, **dadurch gekennzeichnet, dass** die Eingangseinheit (E) ein als einfaches Planetengetriebes ausgebildetes Übersetzungsgetriebe (PGO) enthält, das mittels einer eingangsseitigen Bremse (B0) schaltbar ist.

11. Verzweigungsgetriebe nach Anspruch 10, **dadurch gekennzeichnet, dass** das Übersetzungsgetriebe besteht: aus einem mit der Eingangswelle (StW0) fest verbundenen eingangsseitigen Planetenträger (St0), auf dem eingangsseitige Planetenräder (P0) gelagert sind; aus einem eingangsseitigen Sonnenrad (S0), das auf der eingangsseitigen Sonnenradwelle (SW0, SW1) sitzt und zwischen den Kupplungen (C0, C1) angeordnet ist; und aus einem eingangsseitigen Hohlrad (H0), das mittels der eingangsseitigen Bremse (B2) blockierbar ist.

## Claims

1. Continuously variable power split transmission for powering vehicles and/or work machines by a combustion engine (VM), comprising a variator (V), a summing gear train and a number of couplings, the variator delivering a fraction of the power of the combustion engine with a speed that is continuously variably controlled between maximum speeds in both directions to the summing gear train, where it is added to the other fraction of the power, and where the transition between a plurality of ranges occurs in points of synchronism, the summing gear train being a planetary gear train with four shafts including a sun gear (S1) as a first central gear wheel, a second central gear wheel (S2; H2), a ring gear (H1) and a number of planetary gears (P1, P2) journalled on a planet carrier (St1), wherein:
a. The couplings (C0, C1, B0, B1) are united in one common entry unit (E), which is arranged in the flux of power between the combustion engine (VM) and the summing gear train (SG1; SG2),
b. The summing gear train (SG1; SG2) includes first planetary gears (P1) and second planetary gears (P2) jounalled on a common planet carrier (St1), the first (P1) and the second planetary gears (P2) meshing with each other,
c. The first sun gear (S1) or the first ring gear (H1) are driven by the combustion engine (VM) and the second central gear wheel (S2; H2) is driven by the variator (V), the first sun gear (S1) or the first ring gear (H1), for the transition from one range to the next range in a point of synchronism (1,2,3), being in turn drivingly connected with the combustion engine (VM),
d. The planet carrier (St1) is drinvingly connected with the output shaft (StW1) of the transmission.

2. Continuously variable power split transmission [Fig. 1] according to claim 1, wherein the second central gear wheel is the second sun gear (S2).

3. Continuously variable power split transmission according to claim 2, wherein the planet carrier (St1) includes an output gear (Z1) or is fixed to it.

4. Continuously variable power split transmission [Fig. 2] according to claim 1, wherein the second central geared wheel is the second ring gear (H2).

5. Continuously variable power split transmission according to any of the preceding claims, wherein the first ring gear (H1) is disposed adjacent the entry unit (E) and the planet carrier (St1) is disposed on the other side of the summing gear train (SG1; SG2), and wherein the first sun gear (S1) is disposed adjacent the entry unit (E) and the second central gear (S2; H2) is disposed on the other side of the summing gear train (SG1; SG2), and wherein the planet carrier (St1) is the power output element, rotating with the summed up continuously variable speed (n_StW1).

6. Continuously variable power split transmission according to claim 2 [Fig.1], wherein the first sun gear (S1) meshes with the first planetary gears (P1), the second sun gear (S2) meshes with the second planetary gears (P2), the second planetary gears (P2) mesh with the first planetary gears (P1), and the first planetary gears (P1) mesh with the first ring gear (H1).

7. Continuously variable power split transmission according to claim 2 [Fig.2], wherein the first sun gear (S1) meshes with the first planetary gears (P1), the first ring gear (H1) meshes with the first planetary gears (P1), the first planetary gears (P1) mesh with the second planetary gears (P2) and the second planetary gears (P2) mesh with the second ring gear (H2).

8. Continuously variable power split transmission according to any of the preceding claims, wherein the entry unit (E) is drivingly connected with the combustion engine (VM) via an input shaft (StW0) and includes a first coupling (C0) and a second coupling (C1) , wherein the first coupling (C0) if closed establishes the connection between the input shaft (StW0) and a sun gear shaft (SW1) ending in the sun gear (S1), and wherein the second coupling (C1) if closed drivingly connects the input shaft (StW0) with the first ring gear shaft (HW1).

9. Continuously variable power split transmission according to claim 8, wherein the entry unit (E) comprises a first brake (B1) for immobilizing the first ring gear (H1).

10. Continuously variable power split transmission according to claim 8, wherein the entry unit (E) comprises a step-up planetary gear train (PGO) being a simple planetary gear train, activated by actuating the entry-side brake (B0).

11. Continuously variable power split transmission according to claim 10, wherein the step-up gear train (PGO) includes: an entry unit planet carrier (St0) drivingly connected with the input shaft (StW0) and comprising the entry unit planetary gears (P0); an entry unit sun gear (S0) fixed on the sun gear shaft (SWO, SW1) between the couplings (C0, C1), and an entry side ring gear (H0 which can be immobilized by means of the entry side brake (B0).

## Revendications

1. Transmission à division de puissance à réglage continu destinée à l'entrainement de véhicules et/ou machines de travail par une machine à combustion, comprenant un variateur, une boite d'addition et un nombre d'embrayages, le variateur fournissant une partie de la puissance à la boite d'addition avec un nombre de tours règlable en continu entre deux vitesses maximales dans les deux sens, cette puissance étant superposée au reliquat de la puissance, plusieurs gammes se succédant dans des points de synchronisme, la boite d'addition étant une boite planétaire à quatre arbres qui comporte une première roue solaire (S1) en tant que première roue centrale, une seconde roue centrale (S2; H2), une couronne (H1) et un nombre de pignons satellites (P1, P2) étant montés rotatif dans une cage planétaire (St1), dans laquelle:
a) Les embrayages (C0, C1; B0, B1) sont rassemblées dans une unité d'entrée (E), disposée dans le sentier de puissance entre la machine à combustion (VM) et la boite d'addition (SG1; SG2),
b) La boite d'addition (SG1; SG2) comporte, en tant que satellites, des premiers (P1) et des seconds (P2) pignons satellites (P1,P2) en engrènement mutuel, montés en rotation dans une cage planétaire (St1) commune,
c) La première roue solaire (S1) oubien la première couronne (H1) est entrainée par la machine à combustion (VM) et la deuxième roue centrale (S2 oubienH2) est entrainée par le variateur (V), la première roue solaire (S1) oubien la première couronne (H1) étant entrainées à tour de rôle par la machine à combustion à travers l'unité d'entrée (E), dans la transition d'une gamme à la gamme suivante dans un point de synchronisme,
d) La cage planetaire (St1) est raccordée à la charge à entrainer

2. Transmission à division de puissance [Fig. 1] selon la revendication 1, **caractérisée en ce que** la seconde roue centrale est constituée par la seconde roue solaire (S2).

3. Transmission à division de puissance selon la revendication 2, **caractérisé en ce que** la cage planetaire (St1) forme une roue de sortie (Z1) ou est reliée à une roue de sortie (Z1).

4. Transmission à division de puissance [Fig. 2] selon la revendication 1, **caractérisé en ce que** la seconde roue centrale est constituée par la seconde couronne (H2).

5. Transmission à division de puissance selon l'une des revendications précédentes, **caractérisé en ce que** la première couronne (H1) est située en face de l'unité d'entrée (E) et la cage (St1) est située au coté opposé á la boite d'addition (SG1; SG2), et **en ce que** la première roue solaire (S1) est située en face de l'unité d'entrée (E), et la seconde roue centrale (S2; H2) est située du coté opposé à l'unité d'entrée (E), et **en ce que** la cage (St1) est l'élément de sortie tounant avec le nombre de tours continuellement variable sommé.

6. Transmission à division de puissance selon la revendication 2 [Fig. 1], caractérisé en ce la première roue solaire (S1) est en prise avec les premiers pignons satellites (P1), la seconde roue solaire (S2) s'engrène avec les seconds pignons satellites (P2), les seconds pignons satellites (P2) avec les premiers pignons satellites (P1) et les premiers pignons satellites (P1) s'engrènent avec la première couronne (H1).

7. Transmission à division de puissance selon la revendication 4 [Fig. 2], **caractérisé en ce que** la premièe roue solaire (S1) s'engène avec les premiers pignons satellites (P1), la première couronne (H1) avec les premiers pignons satellites (P1), les premiers pignons satellites (P1) avec les seconds pignons satellites (P2), et les seconds pignons satellites (P2) avec la seconde couronne (H2).

8. Transmission à division de puissance selon l'une des revendications précédentes, **caractérisé en ce que** l'unité d'entrée (E) est reliée à la machine à combustion (VM) par un arbre d'entrée (StW0) et comporte un premier rembrayage (C0) et un second embrayage (C1), le premier embrayage (C0) reliant l'arbre d'entrée à (StW0) à un arbre de roue solaire (SW1) finissant par la roue solaire (S1), et le second embrayage (C1) reliant l'arbre d'entrée (StW0) à l'arbre (HW1) de la première couronne.

9. Transmission à division de puissance selon la revendication 8, **caractérisé en ce que** l'unitée d'entrée (E) comporte un frein (B1) apte de blocquer la première couronne (H1).

10. Transmission à division de puissance selon la revendication 8, **caractérisé en ce que** l'unité d'entrée (E) comporte une dispositif multiplicateur (PGO) étant un simple groupe planetaire, commandé par un frein (B0) du coté entrée.

11. Transmission à division de puissance selon la revendication 10, **caractérisé en ce que** le dispositif multiplicateur comprend: une cage planétaire coté entrée (St0) comportant des pignons satellites d'entrée (P0) raccordé à demeure à un arbre d'entrée (St0); une roue solaire (S0) coté entrée fixèe sur l'arbre de roue solaire coté entrée (SW0,SW1) entre les embrayages (C0,C1); et une couronne coté entrée (H0), apte d'être blocquée par un frein (B2) coté entrée.
